# EUROPÄISCHE PATENTANMELDUNG

(11) **EP 0 542 045 A1**
(43) Veröffentlichungstag der Anmeldung: **19.05.1993**
(21) Anmeldenummer: 92118465.1
(22) Anmeldetag: 29.10.1992
(51) Int. Cl.: A47J 31/40

(54) **Kaffeebrühvorrichtung**

(30) Priorität: 15.11.1991 CH 3348/91
(71) Anmelder: SALVIS AG, FABRIK ELEKTRISCHER APPARATE, CH-6015 Reussbühl (CH)
(72) Erfinder: Wyss, Werner, CH-6205 Eich (CH)
(74) Vertreter: Blum, Rudolf Emil Ernst

(57) **Zusammenfassung**

Die Kaffeebrühvorrichtung besitzt in einem Brühteller (22), der eine Brühkammer begrenzt, ein vorgespanntes Kugelventil (27, 30). Der mit Druck durch die Brühkammer geförderte Kaffee tritt entgegen der Vorspannkraft dieses Kugelventils aus der Brühkammer aus. Damit kann ein stabiler Schaum auf der Oberfläche des gebrühten Kaffees erzeugt werden.

## Beschreibung

Die Erfindung betrifft eine Kaffeebrühvorrichtung mit mindestens einer Brühkammer für Kaffeepulver, durch welche heisses Wasser unter Druck hindurch förderbar ist und die ausgangsseitig durch einen Brühteller begrenzt ist. Solche Vorrichtungen sind Teil von Kaffeemaschinen, insbesondere auch von automatischen Maschinen, wie sie in Restaurants und Kantinen im Einsatz sind.

Unter Kaffee-Kennern gilt es als Zeichen gut gebrühten Kaffees, wenn sich an seiner Oberfläche eine feine Schaumschicht bildet. Die Schaumschicht muss dauerhaft sein, was insbesondere im Restaurantbetrieb von Bedeutung ist.

Bei Kaffeemaschinen ist es bekannt, zur Bildung dieses Schaumes den Kaffee am Ausgang der Brühkammer durch eine Düse hindurch zu fördern. Es hat sich gezeigt, dass sich damit nicht unter allen Betriebsbedingungen optimale Brühbedingunen, insbesondere Druck- und Durchströmverhältnisse, aufrecht erhalten lassen. Insbesondere kann die Düse durch Kaffeerückstände mit der Zeit verengt oder verstopft werden. Dies erfordert häufige Reinigung der Düse und beeinträchtigt die Kaffeequalität.

Es ist die Aufgabe der Erfindung, eine Kaffeebrühvorrichtung der eingangs genannten Art so zu verbessern, dass diese Nachteile nicht auftreten, und dass die Bildung einer haltbaren Schaumschicht auf der Oberfläche des gebrühten Kaffees sichergestellt ist.

Es hat sich gezeigt, dass diese Aufgabe überraschend durch ein Ventil im Auslass des gebrühten Kaffees aus der Brühkamme gelöst wird, das gegen die Auslaufrichtung federnd vorgespannt ist. Vorzugsweise wird als Ventil ein Kugelventil verwendet.

Die Vorspannkraft, welche mit Vorteil einen Gegendruck von ca. 1 bar erzeugt, kann mittels einer Feder aufrecht erhalten werden, welche die Kugel des Kugelventils gegen die Auslaufrichtung des Kaffees in einen Sitz drückt.

Da diese Vorspannkraft durch die Feder gegeben ist, bleiben immer dieselben Druck- und Durchströmverhältnisse erhalten. Eine Verengung oder Verstopfung ist nicht mehr möglich. Ferner verhindert das Kugelventil ein Nachtropfen des Kaffees aus der Brühkammer, indem es sich nach dem Brühvorgang schliesst.

Es hat sich gezeigt, dass mit dieser Anordnung die Bildung eines haltbaren Schaums auf der Kaffeeoberfläche unkritisch und eine optimale Kaffeequalität erzielbar ist.

Nachfolgend wird anhand der Figuren ein Ausführungsbeispiel der Erfindung näher beschrieben. Es zeigen:
Figur 1 eine schematische Darstellung einer Anordnung mit rotierbaren Brühkammern,
Figur 2 eine Schnittansicht entlang der Linie II - II in Fig. 1, und
Figur 3 eine Detailansicht aus Fig. 2.

Die Erfindung wird anhand einer automatischen Kaffeemaschine mit zwei Rotoren 10, 11 bewschrieben, von denen jeder zwei Kammern 12, 13 besitzt, welche die Brühkammern bilden. Eine solche Kaffeemaschine ist Gegenstand der veröffentlichten Europäischen Patentanmeldung Nr. 89 109 466.6. Es versteht sich, dass die Erfindung nicht auf diesen Typ von Kaffeemaschinen beschränkt ist, sondern grundsätzlich bei allen der eingangs erwähnten Brühvorrichtungen zum Einsatz gelangen kann.

Zum besseren Verständnis wird nachfolgend dennoch kurz auf den Aufbau der hier zugrunde gelegten Maschine eingegangen.

Die bereits erwähnten Rotoren 10, 11 sind um Achsen 20, 21 drehbar zwischen einer unten liegenden Tragplatte 14 und einer Deckplatte 15 angeordnet. In der Tragplatte 14 sind an zwei Brühstellen 19 Oeffnungen vorgesehen, in welchen je ein heb- und senkbarer Brühteller 22 angeordnet ist, der die Brühkammern bei entsprechend ausgerichtetem Rotor unten begrenzt. In der Tragplatte 14 sind ferner Auswurf-Oeffnungen 16 für den Kaffeesatz angeordnet. Die Zufuhr von Kaffeepulver in die Brühkammern 12, 13 der Rotoren erfolgt jeweils durch einen zentral angeordneten Kaffeepulver-Schacht 17. Unten an die Brühplatte sind zwei Brühwasser-Boiler 18 angeflanscht, aus denen das beheizte Wasser unter Druck mittels einer Pumpe (nicht dargestellt) durch das in der Brühkammer befindliche Kaffeepulver gefördert ist.

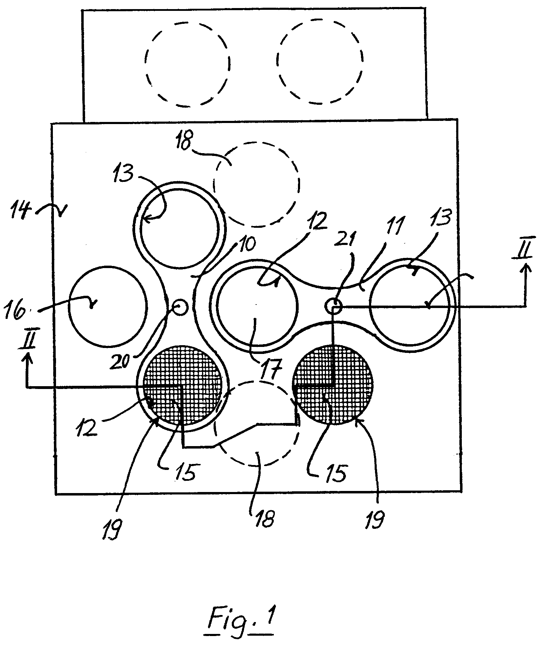

Die Funktionsweise der Rotoren 10, 11 ist in der genannten Veröffentlichung im Detail beschrieben. Es wird jeweils eine der Kammern 12 oder 13 unter dem zentralen Kaffeepulver-Schacht 17 positioniert und dort mit Kaffee gefüllt. Der entsprechende Rotor wird danach um eine Vierteldrehung gedreht, so dass sich die gefüllte Kammer 12 oder 13 bei einer der Brühstellen 19 befindet (vergl. Position des Rotors 10 in Fig. 1). In dieser Lage erfolgt der noch zu beschreibende Brühvorgang. Danach erfolgt eine weitere Vierteldrehung in eine Lage, bei welcher gleichzeitig der Kaffeesatz aus der jeweiligen Rotorkammer ausgestossen und die andere Kammer mit neuem Kaffeepulver gefüllt werden kann (vergl. Position des Rotors 11 in Fig. 1).

Figur 2 zeigt einen Schnitt entlang der in Figur 1 markierten Linie II - II. Es sind im wesentlichen die zwei identischen Brühstellen erkennbar. Bei der links gezeigten Brühstelle, welche im folgenden näher beschrieben wird, befindet sich ein mittels Spindelantrieb 25 heb- und senkbarer Brühzylinder 23, durch welchen das beheizte Wasser in die Brühkammer gefördert wird, in seiner oberen Lage. Entsprechend befindet sich der heb- und senkbare Brühteller 22, durch den der gebrühte Kaffee aus der Brühkammer austritt, in seiner unteren Lage. In dieser Position kann der Rotor zur Brühstelle verschwenkt werden.

Vor dem Brühvorgang wird zunächst der Brühteller 22 mittels einer Hydraulik 24 in die Brühkammer 12 geschoben und hydraulisch verriegelt. Danach wird der Brühzylinder 23 mit dem Spindelantrieb 25 von oben in die Brühkammer abgesenkt und mit einer Presskraft von ca. 1,3 kg/cm² gegen das Kaffeepulver gedrückt. Dieses wird zwischen dem Brühteller 22 und dem Brühzylinder 23 mit entsprechendem Druck komprimiert.

Anschliessend wird das in einem der Boiler 18 auf 80 - 85°C erhitzte Wasser mit einem Pumpendruck von ca. 6 bar durch den Brühzylinder 23 in die Brühkammer 12 gefördert.

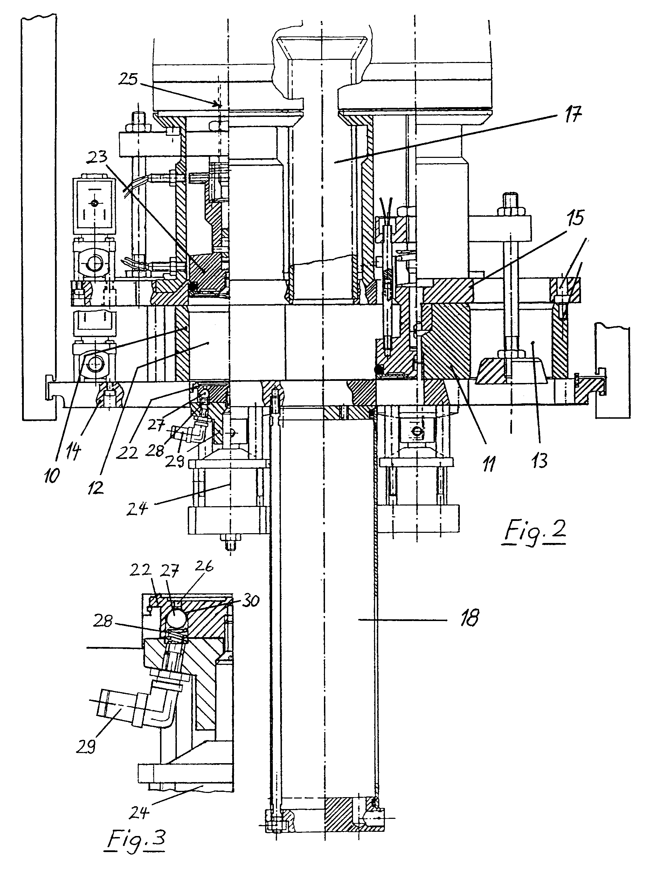

Der durch den Brühteller 22 austretende Kaffee gelangt durch eine Bohrung 26 im Brühteller 22 zum Ventilkörper 27 eines Ventils, wie insbesondere aus Fig. 3 ersichtlich ist. Dieses ist vorzugsweise als Kugelventil ausgebildet. Die Kugel 27 wird mit einer Feder 28 entgegen der Austrittsrichtung des Kaffees gegen einen Sitz 30 vorgespannt. Die Kugel 27, bzw. ihr Sitz, haben beispielsweise einem Durchmesser von 5 mm, während die Bohrung 26 einen wesentlich geringeren Durchmesser besitzt. Die Vorspannkraft ist nun so bemessen, dass das Kugelventil einen Gegendruck von etwa 1 bar erzeugt. Gegen diesen Druck tritt der Kaffee durch das Kugelventil, d.h. zwischen der Kugel 27 und ihrem Sitz 30, aus, wobei durch die Druckentspannung feine Bläschen im Kaffee entstehen, die danach den Schaum bilden. Der Kaffee gelangt dann über einen Anschluss 29 zum Auslauf.

Die Druckentspannung im Kugelventil, die zur Schaumbildung führt, ist vor allem durch die Vorspannkraft der Kugel bestimmt. Die Funktion des Ventils kann damit nicht durch Verstopfen oder Kaffeeanlagerungen beeinträchtigt werden. Die Betriebsbedingungen bleiben damit immer gleich. Ausführliche Versuche haben ergeben, dass damit optimale Brühbedingungen, d.h. Druck- und Durchströmverhältnisse, bleibend aufrecht erhalten werden können, und damit die Bildung eines stabilen Schaumes dauernd, d.h. während eines länger dauernden Automatenbetriebs, sichergestellt wird.

Das beschriebene Kugelventil hat zudem eine erwünschte Sperrwirkung, indem es sich nach dem Brühvorgang schliesst und damit das Nachlaufen von Kaffee verhindert.

Das Kugelventil kann durch einfaches Spülen sehr leicht und ohne mechanische Eingriffe gereinigt werden.

Wie bereits erwähnt, ist ein entsprechendes Ventil grundsätzlich bei jeder Kaffeemaschine der eingangs erwähnten Art einsetzbar und ist nicht an die hier speziell beschriebene Vorrichtung gebunden. Dabei ist es möglich, eine Einstellung der Vorspannkraft des Kugelventils vorzusehen, indem die Federspannung 28 z.B. durch die Veränderung der Federhubs beeinflusst wird.

## Patentansprüche

1. Kaffeebrühvorrichtung mit mindestens einer Brühkammer (12) für Kaffeepulver, durch welche heisses Wasser unter Druck hindurch förderbar ist und die ausgangsseitig durch einen Brühteller (22) begrenzt ist, dadurch gekennzeichnet, dass ein Auslass (26, 29) für den Kaffee aus der Brühkammer (12) vorgesehen ist, in welchem ein Ventil (27, 30) angeordnet ist, dessen Ventilkörper entgegen der Austrittsrichtung des Kaffees federnd vorgespannt ist.

2. Kaffeebrühvorrichtung nach Anspruch 1, dadurch gekennzeichnet, dass das Ventil (27, 30) im Brühteller (22) angeordnet ist.

3. Kaffeebrühvorrichtungnach einem der vorangehenden Ansprüche, dadurch gekennzeichnet, dass das Ventil (27, 30) so gegen die Austrittsrichtung vorgespannt ist, dass ein Gegendruck von ca. 1 bar erzeugt wird.

4. Kaffeebrühvorrichtung nach Anspruch 4, dadurch gekennzeichnet, dass der Ventilkörper (27) mittels einer Feder (28) gegen einen Sitz gedrückt wird.

5. Kaffeebrühvorrichtung nach Anspruch 5. dadurch gekennzeichnet, dass der Sitz (30) des Ventils im Brühteller ausgebildet ist.

6. Kaffeebrühvorrichtung nach einem der vorangehenden Ansprüchen, dadurch gekennzeichnet, dass der Ventilkörper (27) gegen eine Bohrung (26) im Brühteller vorgespannt ist, deren Durchmesser wesentlich kleiner als der Ventilkörperdurchmesser ist.

7. Kaffeebrühvorrichtung nach einem der vorangehende Ansprüche, dadurch gekennzeichnet, dass das Ventil als Kugelventil (27, 30) und der Ventilkörper als Kugel (27) ausgebildet ist.

8. Kaffeebrühvorrichtung nach einem der vorangehenden Ansprüche, wobei das heisse Wasser mittels einer Pumpe durch die Brühkammer förderbar ist, welche einen Wasserdruck von ca. 6 bar erzeugt.

9. Kaffeebrühvorrichtung nach einem der vorangehenden Ansprüche, dadurch gekennzeichnet, dass ein heb- und senkbarer Brühzylinder (23) vorgesehen ist, aus welchem das heisse Wasser in die Brühkammer (12) gelangt, wobei der Brühzylinder (23) den Kaffeee in der Brühkammer mit einem Druck von mehr als 1 kg/cm² komprimiert.

10. Kaffeebrühvorrichtungnach einem der vorangehenden Ansprüche, dadurch gekennzeichnet, dass das durch die Brühkammer geförderte Wasser auf eine Temperatur im Bereich zwischen 80 und 85°C erwärmt ist.
